Europäisches Patentamt

European Patent Office

Office européen des brevets

(19)

(11) **EP 0 612 173 B1**

(12)

# FASCICULE DE BREVET EUROPEEN

(45) Date de publication et mention
de la délivrance du brevet:
**01.07.1998 Bulletin 1998/27**

(51) Int Cl.6: **H04L 12/56**

(21) Numéro de dépôt: **94400417.5**

(22) Date de dépôt: **09.02.1994**

(54) **Réservation de débit dans un réseau à transfert temporel asynchrone**

Verfahren zur Reservierung von Bitraten in einem ATM-Netz

Bitrate reservation in a ATM network

(84) Etats contractants désignés:
**BE DE ES GB IT NL**

(30) Priorité: **18.02.1993 FR 9302023**

(43) Date de publication de la demande:
**24.08.1994 Bulletin 1994/34**

(73) Titulaire: **FRANCE TELECOM**
**75015 Paris (FR)**

(72) Inventeurs:
• **Tranchier, Didier**
**F-22300 Lannion (FR)**
• **Boyer, Pierre**
**F-22300 Lannion (FR)**
• **Quinquis, Michel**
**F-22300 Lannion (FR)**

(74) Mandataire: **Cabinet Martinet & Lapoux**
**BP 405**
**78055 Saint Quentin en Yvelines Cédex (FR)**

(56) Documents cités:
**EP-A- 0 383 660**          **EP-A- 0 384 758**

• **COMPUTER NETWORKS AND ISDN SYSTEMS vol. 24, no. 4 , Mai 1992 , AMSTERDAM, NL pages 321 - 334 P.E. BOYER ET AL. 'A reservation principle with applications to the ATM traffic control'**
• **INTERNATIONAL CONFERENCE ON COMPUTER COMMUNICATION 1992 , AMSTERDAM, NL pages 191 - 196 P. CROCCETTI ET AL 'Connectionless support service in ATM'**
• **IEEE WORKSHOP ON FUTURE TRENDS OF DISTRIBUTED COMPUTER SYSTEMS Octobre 1990 , LOS ALAMITOS, USA pages 450 - 456 W. WANG ET AL. 'BANDWIDTH VARIATION AND CONTROL FOR ATM NETWORKS '**

## Description

La présente invention concerne de manière générale des réseaux de télécommunications mettant en oeuvre le mode de transfert temporel asynchrone dit ATM, signifiant "Asynchronous Transfer Mode" en terminologie anglosaxone.

Selon un tel mode de transfert, les ressources sont partagées dans le temps entre plusieurs terminaux d'usager d'un réseau, et les unités de données, appelées paquets ou cellules, se suivent sans référence temporelle de position les unes par rapport aux autres. Des identifications des voies de communication respectivement relatives aux différents terminaux d'usager sont portées par ces paquets ou cellules. Contrairement à la technique temporelle synchrone, il n'y a pas d'assignation fixe d'intervalles de temps aux unités de données d'une voie de communication. Un terminal d'usager transmet des unités de données à son rythme propre, sans référence directe avec le réseau, à l'exception du rythme de transmission instantané entre le terminal et le réseau.

Deux types de technique mettent en oeuvre un tel mode de transfert, savoir les techniques de commutation de paquets classiques fondées sur des protocoles tels que la recommandation X.25 du C.C.I.T.T., et les techniques de réseaux intégrés à haut débit, ou techniques de réseaux ATM. Des réseaux ATM sont en cours de développement et devraient prochainement être opérationnels. Ces réseaux ATM, contrairement à leurs prédécesseurs à commutation de paquets, offrent des capacités de débit élevées et satisfont à des contraintes de temps réel nécessaires à des applications particulières, telles que transmission d'images vidéo, consultation de banques de données, etc., exigeantes tant du point de vue de la valeur élevée des débits que du point de vue de la sporadicité des informations à transmettre.

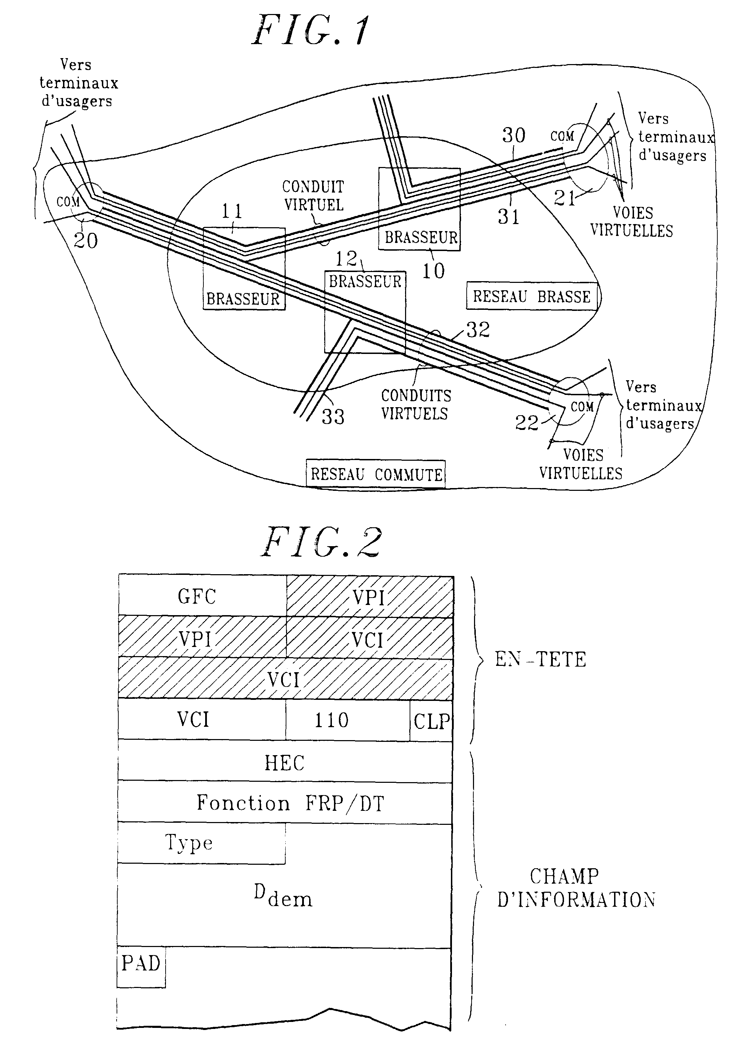

Dans le cadre de l'implantation de ces réseaux ATM, les exploitants de réseaux de télécommunications sont unanimes sur le développement de ces réseaux effectué en deux étapes. Ces deux étapes sont représentées schématiquement à la figure 1. Au cours d'une première étape, un exploitant de réseaux fournira un réseau "brassé" offrant un service de liaison spécialisée à un terminal d'usager. Une seconde étape verra naître le réseau "commuté" final qui interconnectera tous les terminaux d'usager entre eux.

Le réseau brassé sera destiné à satisfaire rapidement une clientèle professionnelle très demandeuse en débits élevés. Le réseau brassé est constitué de brasseurs 10, 11 et 12 qui aiguillent chaque conduit virtuel 30, 31, 32 et 33 d'un point à un autre. Plusieurs terminaux d'usager se partagent un même conduit virtuel qui relie deux points prédéterminés.

La seconde étape résultera de l'adjonction à cette infrastructure de réseau brassé, de commutateurs ATM 20, 21 et 22 qui commuteront des voies virtuelles constituant les conduits virtuels. Dans le cadre de cette seconde étape, l'offre ne se limitera plus à un service de liaison spécialisée offrant à l'usager seulement une liaison à haut débit entre deux points fixes, mais chaque terminal d'usager bénéficiera d'un véritable service commuté permettant de l'interconnecter à n'importe-quel autre terminal d'usager.

La figure 2 montre une cellule ATM constituant l'unité de données transitant dans le réseau ATM. La cellule comprend un en-tête et un champ d'information. Dans l'en-tête, des champs, hachurés dans la figure 2, sont occupés par des identificateurs de voie virtuelle VCI ("Virtual Channel Identifier") et de conduit virtuel VPI ("Virtual Path Identifier") qui servent à l'acheminement de la cellule dans le réseau. Pour le développement du réseau brassé, constituant l'étape préliminaire d'un réseau ATM, seul est requis l'identificateur de conduit virtuel VPI pour l'acheminement de la cellule.

Dans le réseau brassé, plusieurs terminaux d'usager se partagent un même conduit virtuel. Avantage principal du mode temporel asynchrone, chaque terminal d'usager transmet des données à son rythme propre. Ainsi il est avantageux d'optimiser la largeur de bande du conduit virtuel par réservation, préalablement à la transmission des données, d'un débit de transmission par chaque terminal d'usager. Dans ce cadre a été défini un protocole de réservation rapide de débit basé sur les deux caractéristiques suivantes. Le type du trafic écoulé dans un conduit virtuel pour un terminal d'usager donné est constant ou variable, et le débit de transfert des données est fixé définitivement à la connexion. Typiquement, le débit réservé dans le cas d'un trafic constant est le "débit crête", tandis que pour un trafic variable, le débit réservé est un débit intermédiaire dépendant des caractéristiques de la source.

Par ailleurs, l'article "A reservation principle with applications to the ATM traffic control" de Pierre BOYER et Didier TRANCHIER, deux des inventeurs de la présente demande de brevet, publié dans "Computer Networks and ISDN Systems", 15 mai 1992, Vol. 24, No. 4, pages 321-334, (North-Holland), présente un protocole de réservation rapide à transmission retardée FRP-DT ("Fast Reservation Protocol with Delayed Transmission"). Un tel protocole est particulièrement destiné à des sources à débit variable par palier négocié et devrait être mis en oeuvre dans le réseau ATM commuté final. Ce protocole est le suivant.

Une source de données, telle que terminal d'usager, se connecte initialement par transmission d'une requête d'allocation relative à un débit donné. En cas de nécessité d'une augmentation ou d'une diminution du débit réservé au cours de la transmission, cette source transmet une cellule de demande d'augmentation ou de diminution de débit. Cette cellule est reçue par une unité de gestion de protocole rattachée à une pluralité de sources et localisée en entrée du réseau ATM. Cette unité de gestion a pour fonction, en réponse à la réception d'une cellule de demande d'augmentation ou de diminution de débit, de transmettre, dans la limite d'un nombre de fois prédéterminé, des requêtes successives de demande d'augmentation ou de diminution de débit tant que les requêtes précédentes n'ont pas été satisfaites. Dans le cas d'une demande d'augmentation de débit, si l'augmentation de débit demandée ne peut être satisfaite dans le réseau après les requêtes successives, la demande d'augmentation de débit est rejetée. Dans le cas inverse, la source se voit attribuée une largeur de bande supérieure en dépendance de l'augmentation de débit demandée. Dans tous les cas, le débit déjà alloué à la source n'est pas contesté, et une demande de diminution de débit est une procédure purement indicative qui n'est jamais rejetée. Un tel protocole est proche du procédé décrit dans le brevet européen EP-B-0 383 660 déposé par l'un des inventeurs de la présente demande de brevet.

L'invention, basée sur le protocole précité, vise à fournir un procédé de réservation de débit pour réseaux de télécommunications à technique temporelle asynchrone, particulièrement destiné au réseau brassé ATM résultant de la première étape de la mise en oeuvre d'un réseau ATM. L'invention vise à garantir en permanence aux terminaux d'usager, après connexion et indépendamment des demandes d'augmentation et diminution de débits précédemment acceptées pour ces sources, un débit inférieur au débit de connexion, même lorsque le trafic dans le réseau est momentanément proche de la saturation. Ainsi, l'usager n'hésite pas à effectuer des diminutions de réservation de débit par crainte de ne pas pouvoir bénéficier de nouveau rapidement d'un débit plus élevé par surcharge du réseau. Ce comportement de la part de l'usager contribue à une optimisation de la largeur de bande disponible.

A cette fin, un procédé de réservation de débit dans des noeuds d'un réseau de télécommunications à transfert temporel asynchrone, le long d'un chemin de connexion reliant un terminal émetteur à un terminal récepteur, comprend,

lors d'une phase initiale de demande d'établissement du chemin de connexion, l'émission par ledit terminal émetteur d'une cellule de connexion incluant un identificateur dudit chemin de connexion et un mot de réservation représentatif d'un débit de connexion à réserver, la connexion n'étant établie et ledit débit de connexion n'étant réservé pour ledit terminal émetteur dans les noeuds dudit chemin de connexion que si dans chacun des noeuds, une somme du total de débits de connexion réservés dans ledit chacun des noeuds et dudit débit de connexion est inférieure à un débit utile disponible dans une voie multiplex sortant dudit chacun des noeuds et appartenant audit chemin de connexion, lesdits débits de connexion réservés étant réservés à d'autres terminaux et relatifs à ladite voie multiplex, et

lors d'une phase principale succédant à l'établissement du chemin de connexion et à la réservation dudit débit de connexion à réserver en un débit de connexion réservé, l'émission à travers ledit chemin de connexion par ledit terminal émetteur de cellules de demande de réservation de débit incluant chacune un mot représentatif d'un nouveau débit à réserver pour modifier un débit courant réservé en un nouveau débit réservé,

l'une desdites cellules de demande de réservation relative à une diminution de débit provoquant, dans ledit chacun des noeuds, une décrémentation dudit total de débits courants réservés de la différence desdits débit courant et nouveau débit à réserver.

Ce procédé est caractérisé en ce que l'une desdites cellules de demande de réservation relative à une augmentation de débit provoque, dans ledit chacun des noeuds,

d'une part, lorsqu'une somme du total de débits courants réservés mémorisés et de la différence desdits nouveau débit à réserver et débit courant réservé est supérieure à ladite somme du total de débits de connexion réservés, une mémorisation de ladite cellule de réservation en file d'attente si ledit nouveau débit à réserver est inférieur audit débit de connexion ou un rejet de ladite cellule de réservation si ledit nouveau débit à réserver est supérieur audit débit de connexion, et,

d'autre part, lorsque ladite somme du total des débits courants réservés mémorisés et de la différence desdits nouveau débit à réserver et débit courant réservé est inférieure à ladite somme du total de débits de connexion réservés, une augmentation effective dudit débit courant réservé en ledit nouveau débit réservé, le cas échéant après ladite mémorisation en file d'attente et après augmentations effectives de débits courants réservés en de nouveaux débits réservés provoquées par des cellules de demande de réservation relatives à des augmentations de débit et mémorisées en file d'attente précédemment à ladite une desdites cellules de demande de réservation.

Ainsi, ladite mémorisation en file d'attente est effectuée seulement lorsque le nouveau débit à réserver est inférieur au débit de connexion, c'est-à-dire lorsque la demande de réservation est prioritaire par rapport à d'autres demandes de réservation de débits à réserver supérieurs au débit de connexion.

Selon une caractéristique avantageuse de l'invention, ladite cellule de connexion comprend, en outre, un mot de débit permanent représentatif d'un débit permanent réservé dans chaque noeud dudit chemin de connexion audit terminal émetteur.

D'autres caractéristiques et avantages de la présente invention apparaîtront plus clairement à la lecture de la description suivante en référence aux dessins annexés correspondants dans lesquels :

- la figure 1, déjà commentée, montre l'architecture d'un réseau ATM final pour expliquer les deux étapes de développement d'un tel réseau ;

- la figure 2, également déjà commentée, montre un format de cellule ATM ;
- la figure 3 est un bloc-diagramme schématique d'un réseau ATM mettant en oeuvre le procédé de réservation de débit selon l'invention ;
- la figure 4 est un diagramme temporel de l'évolution d'un débit variable par palier négocié d'un terminal rattaché au réseau ATM montré à la figure 3 ; et
- la figure 5 est un algorithme du procédé de réservation de débit selon l'invention.

Dans la description qui suit, le terme "noeud" désigne aussi bien un brasseur qu'un commutateur du réseau ATM.

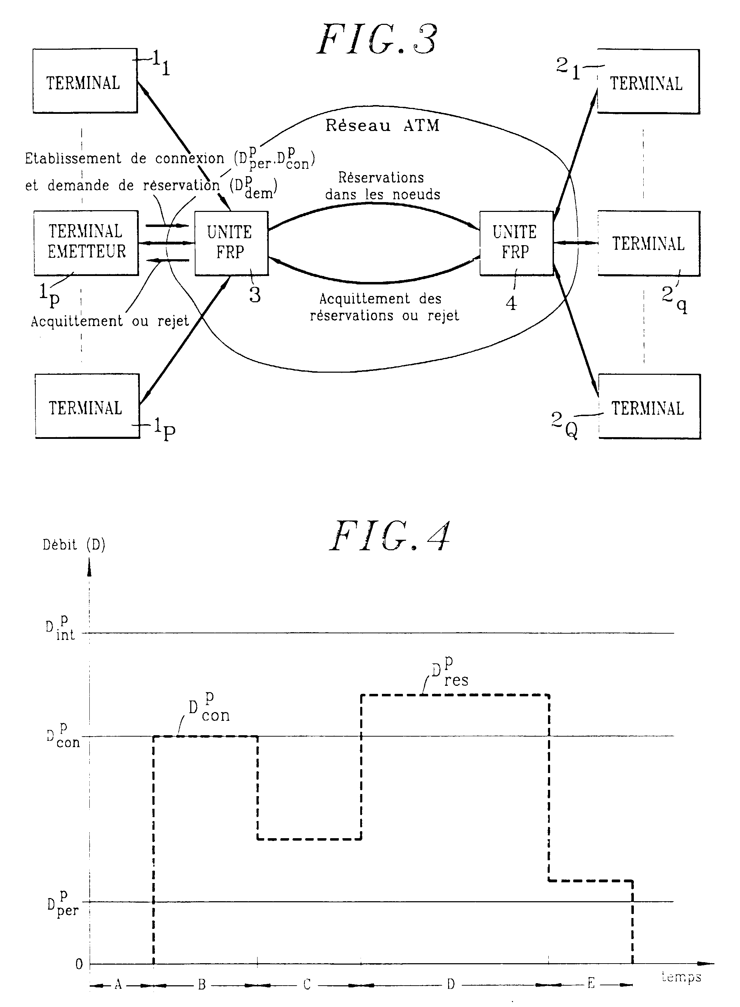

En référence à la figure 3, une architecture de réseau ATM mettant en oeuvre le procédé de réservation de débit selon l'invention comprend schématiquement deux groupes de terminaux d'usager $1_1$ à $1_P$ et $2_1$ à $2_Q$ respectivement connectés à deux unités de gestion de protocole de réservation rapide FRP ("Fast Reservation Protocol") 3 et 4 appartenant au réseau ATM. Les deux unités de gestion 3 et 4 sont interconnectées entr'elles à travers une pluralité de noeuds du réseau (non représentés).

Il est supposé qu'un terminal, désigné par $1_p$, p étant compris entre 1 et P, rattaché à l'unité 3, doive transmettre des données à un terminal $2_q$, q étant compris entre 1 et Q, rattaché à l'unité 4. Durant une phase initiale, préalablement à l'émission des données vers le terminal $2_q$, le terminal émetteur $1_p$ transmet à l'unité 3 une cellule de demande d'établissement de connexion incluant, en outre, un identificateur de chemin de connexion définissant un chemin à travers le réseau entre les terminaux $1_p$ et $2_q$, un mot de débit permanent $D^p_{per}$ et un mot de débit de connexion $D^p_{con}$. Cette cellule de demande d'établissement de connexion est retransmise par l'unité 3 vers le premier noeud du réseau reliant le terminal $1_p$ au terminal $2_q$. Ce premier noeud vérifie si la capacité de débit disponible dans ce noeud, relativement au chemin de connexion, autorise l'acheminement de données au débit de connexion $D^p_{con}$. Dans l'affirmative, la cellule est transmise au noeud suivant qui également vérifie si la capacité de débit disponible dans ledit noeud suivant autorise l'acheminement de données au débit de connexion, et ainsi de suite jusqu'au dernier noeud reliant les terminaux $1_p$ et $2_q$.

Lorsque, dans au moins l'un des noeuds du chemin reliant les terminaux $1_p$ et $2_q$ à travers les unités de gestion 3 et 4, la capacité disponible dans ledit un noeud est inférieure au débit de connexion $D^p_{con}$, alors la demande de connexion est rejetée.

Dans le cas inverse, la demande de connexion est acceptée. De préférence, il est prévu un moyen dans l'unité de gestion 3 pour réitérer chaque demande de connexion, tant que cette demande est rejetée, un nombre de fois inférieur à un nombre prédéterminé. Dès que la demande de connexion a été acceptée, le terminal d'usager $1_p$ dispose d'une largeur de bande correspondante au débit de connexion $D^p_{con}$ pour transmettre des données. Ce débit de connexion $D^p_{con}$ est naturellement inférieur au débit physique $D^p_{int}$ à l'interface entre le terminal $1_p$ et l'unité 3 à laquelle il est rattaché.

Le mécanisme de réservation d'un débit de connexion par un terminal lors d'une phase d'établissement de connexion est le suivant.

Dans chaque noeud du réseau, un premier compteur mémorise la somme des débits de connexion réservés par tous les terminaux dont les données sont transférées à travers ce noeud. Le rejet ou l'acception d'une nouvelle demande de connexion résulte d'une comparaison de la somme des débits de connexion réservés par d'autres terminaux et du débit de connexion $D^p_{con}$ de cette nouvelle connexion à établir avec le débit utile disponible μ supporté par la voie multiplex de sortie de noeud qui est utilisée pour acheminer les données au débit de connexion $D^p_{con}$ de cette nouvelle connexion. Si la somme précitée est inférieure ou égale au débit utile, la connexion est acceptée, sinon elle est rejetée.

Les concepts de débit permanent et débit de connexion représentés par les mots $D^p_{per}$ et $D^p_{con}$ résultent des considérations suivantes. Les usagers professionnels utilisent les réseaux de télécommunications selon deux régimes très distincts: d'une part, un régime de période chargée, d'autre part, un régime de période creuse. Le régime de période chargée dure peu de temps, typiquement une à deux heures par jour, et demande beaucoup de ressources tandis qu'en période creuse, les besoins en débit sont beaucoup plus faibles. Le débit de connexion $D^p_{con}$ est dimensionné en fonction de l'activité en période chargée. Le débit permanent $D^p_{per}$ est par exemple choisi en fonction d'un débit moyen en période creuse. Dès qu'une connexion à établir est demandée par le terminal d'usager $1_p$, ce débit permanent $D^p_{per}$ est alloué de manière permanente au terminal $1_p$, sans aucune restriction relativement à la charge du réseau.

Il est à noter que les mots de débit permanent $D^p_{per}$ et de débit de connexion $D^p_{con}$ sont fournis par le terminal d'usager $1_p$ qui décide donc lui-même des valeurs de débit choisies, en dépendance des coûts imposés par l'exploitant du réseau. Par exemple, le débit permanent est facturé uniquement par abonnement, proportionnellement à la valeur choisie de ce débit, tandis que le débit de connexion est facturé pour partie selon un mode d'abonnement forfaitaire et pour partie en fonction du volume de données effectivement transmis.

Comme montré dans la figure 4, une fois la connexion établie entre le terminal $1_p$ et le terminal $2_q$, le terminal émetteur $1_p$ fonctionne comme une source à débit variable par palier négocié. Selon cette figure 4, cinq phases de fonctionnement A à E du terminal $1_p$ correspondant à cinq débits respectifs sont prévues. Dans une première phase A, le terminal $1_p$ est supposé en repos, non connecté. Dans une seconde phase B après connexion, un débit réservé $D^p_{res}$ alloué au terminal est égal au débit de connexion $D^p_{con}$. Durant des phases C et D successives respectives, le terminal $1_p$ dispose après des demandes successives acceptées, respectivement de débits réservés $D^p_{res}$ inférieur et supérieur au débit de connexion $D^p_{con}$. Enfin, durant une dernière phase E avant rupture de la connexion, un débit réservé $D^p_{res}$ inférieur au débit de connexion $D^p_{con}$ est alloué au terminal $1_p$ sur sa demande. Toutes les phases A à E sont précédées par des procédures de réservation de débit par le terminal $1_p$ en coopération avec l'unité de gestion de protocole 3.

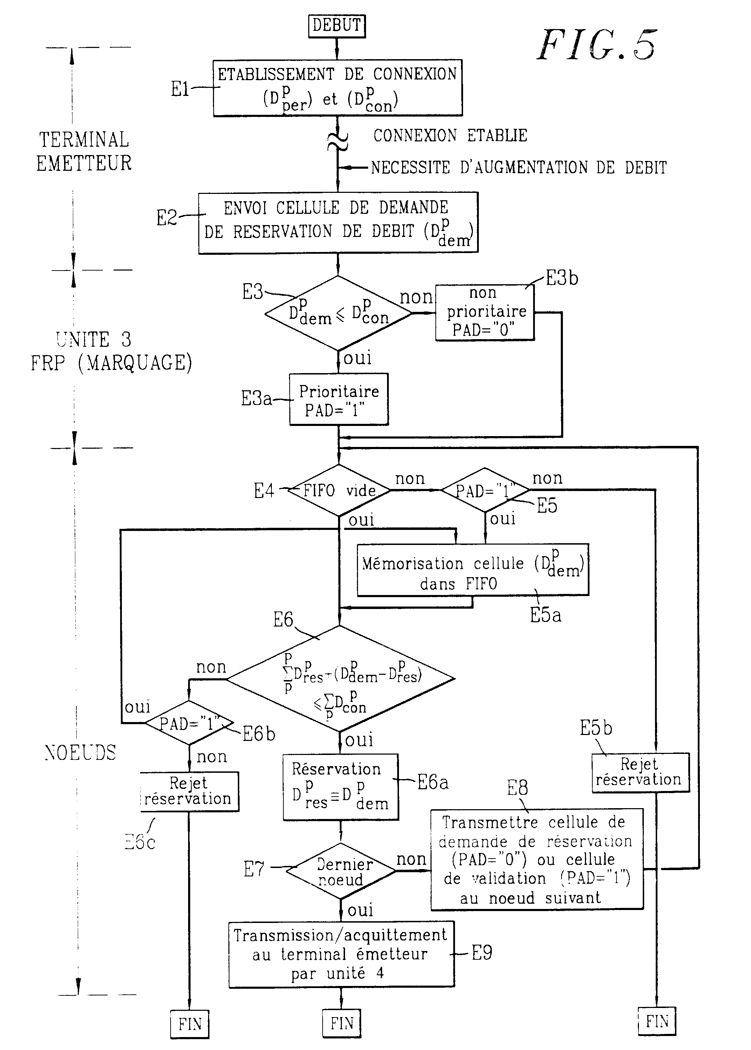

Le procédé complet de réservation de débit selon l'invention est maintenant présenté sous forme d'algorithme composé principalement de huit étapes E1 à E8, en référence à la figure 5.

Initialement, lors d'une première étape E1, le terminal émetteur $1_p$ demande l'établissement d'une connexion avec le terminal $2_q$. Pour cela, comme signalé précédemment, le terminal transmet une cellule de demande de connexion incluant, en outre, un mot de débit permanent $D^p_{per}$ et un mot de débit de connexion $D^p_{con}$. Cette cellule est reçue par l'unité de gestion de protocole 3 qui a la charge de retransmettre, à travers le réseau ATM, cette cellule de demande de connexion vers le premier noeud du chemin de connexion reliant les deux terminaux $1_p$ et $2_q$. Dans ce premier noeud est vérifié que la somme de l'ensemble des débits de connexion réservés par d'autres terminaux et du débit de connexion $D^p_{con}$ demandé par le terminal $1_p$ est inférieure au débit utile disponible dans la voie multiplex de sortie, formant partie du chemin de connexion, dudit premier noeud. Si cette condition est satisfaite, la demande de connexion est transmise au noeud suivant du chemin de connexion, et de la même manière, dans ce noeud suivant est vérifié si le noeud peut supporter ce débit $D^p_{con}$, et ainsi de suite jusqu'au dernier noeud du chemin de connexion. Lorsque la condition n'est pas vérifiée dans au moins l'un des noeuds du chemin de connexion, la demande de connexion est rejetée, sinon elle est acceptée. Le terminal $1_p$ est alors dans une situation représentée par la phase B dans la figure 4.

Dans chaque noeud traversé par la cellule de demande de connexion, un premier compteur de ce noeud est incrémenté de la valeur du débit $D^p_{con}$ dans le cas où ce débit peut être supporté par le noeud.

Après acceptation de la connexion, le terminal $1_p$ dispose d'un débit courant réservé égal au débit de connexion $D^p_{con}$. Pour des raisons de coût, il peut s'avérer intéressant pour l'usager du terminal $1_p$ de diminuer plus ou moins durablement ce débit réservé $D^p_{con}$ dans le cas où le terminal $1_p$ désire transmettre avec un débit inférieur au débit de connexion $D^p_{con}$. Dans ce cas là, le terminal $1_p$ transmet une cellule de demande de diminution de réservation de débit à l'unité 3. Cette cellule contient un mot représentatif du nouveau débit à réserver $D^p_{dem}$ inférieur au débit de connexion $D^p_{con}$. Une telle procédure de réservation d'un débit inférieur au débit courant réservé est purement indicative et toujours acceptée par chacun des noeuds du chemin de connexion. La cellule de réservation reçue par l'unité 3 est transférée dans tous les noeuds du chemin de connexion reliant les deux terminaux $1_p$ et $1_q$ et met à jour des seconds compteurs de ces noeuds en diminuant leur contenu par la différence de la valeur de débit courant réservé, par exemple égale au débit de connexion $D^p_{con}$ si cette phase de diminution de débit succède à la phase de connexion, et de la valeur du nouveau débit à réserver. L'unité 3 acquitte l'acceptation de la diminution de débit réservé au terminal $1_p$ qui se trouve alors dans la situation schématisée par la phase C de la figure 4.

En référence à la figure 5, il est maintenant présenté le cas selon lequel le terminal émetteur $1_p$ souhaite une augmentation de débit réservé. Comme montré par l'étape E2 de la figure 5, le terminal $1_p$ envoie une cellule de demande d'augmentation de réservation de débit à l'unité de gestion de protocole 3. Cette cellule comprend, en outre, un mot de nouveau débit à réserver $D^p_{dem}$ supérieur au débit courant réservé précédemment $D^p_{res}$.

Comme montré par les trois étapes E3, E3a et E3b, l'unité de gestion de protocole 3 compare, dans le cas de cette demande d'augmentation de débit, le mot représentatif du nouveau débit à réserver $D^p_{dem}$ contenu dans la cellule à la valeur du débit de connexion $D^p_{con}$ transmise lors de la phase d'établissement de la connexion et mémorisée dans l'unité 3. Si le nouveau débit à réserver $D^p_{dem}$ est inférieur au débit de connexion $D^p_{con}$ (étape E3a), un bit PAD, dit bit de Priorité d'Augmentation de Débit, de la cellule montrée à la figure 2 est mis à l'état logique "1". Lorsque la demande d'augmentation de débit n'est pas prioritaire, c'est-à-dire lorsque $D^p_{dem}$ est supérieur à $D^p_{con}$, le bit PAD est mis à l'état logique "0". Cette opération de marquage est réalisée par l'unité 3, puis la cellule marquée est transmise au premier noeud du chemin de connexion reliant les deux terminaux $1_p$ et $2_q$ connectés. De cette manière, deux niveaux de priorité, prioritaire et non prioritaire, sont distingués selon l'invention, dans le cas d'une demande d'augmentation de débit, en fonction du nouveau débit à réserver $D^p_{dem}$ par rapport au débit de connexion $D^p_{con}$. Par ailleurs, l'unité 3 transmet ladite cellule de demande d'augmentation de débit à travers tous les noeuds du chemin de connexion indépendamment d'une quelconque réservation du nouveau débit à réserver $D^p_{dem}$ dans un des noeuds, et uniquement vers le premier noeud du chemin de connexion, respectivement selon que ladite cellule est relative à une demande d'augmentation prioritaire et non prioritaire.

Selon l'invention, chaque noeud du réseau comprend des mémoires organisées en files d'attente qui fonctionnent selon une discipline FIFO (premier entré, premier sorti) respectivement pour chacune de ses voies multiplex de sortie. Ces mémoires sont destinées à mémoriser des cellules de demande d'augmentation de réservation de débit qui sont prioritaires, c'est-à-dire des cellules de demande pour lesquelles les nouveaux débits à réserver $D^p_{dem}$ sont inférieurs aux débits de con-

nexion $D_{con}^p$.

Sur réception par un noeud, d'une cellule de demande de réservation d'un débit $D_{dem}^p$ supérieur au débit courant réservé $D_{res}^p$ par le terminal $1_p$, il est vérifié dans ce noeud si la file d'attente FIFO de mémorisation des cellules de demande d'augmentation de débit associée à la voie multiplex de sortie du noeud appartenant au chemin de connexion est vide (étape E4).

Selon une première alternative de l'étape E4, la file d'attente FIFO est vide, ce qui signifie qu'aucune demande prioritaire n'est en attente. La somme des débits courants réservés

$$\left(\sum_p D_{res}^p\right)$$

pour ladite voie multiplex de sortie et de la différence des nouveau débit à réserver et débit courant réservé $(D_{dem}^p - D_{res}^p)$ par le terminal $1_p$ est comparée à la somme des débits de connexion réservés

$$\left(\sum_p D_{con}^p\right)$$

par les terminaux $1_1$ à $1_P$ pour cette voie multiplex de sortie (étape E6). Lorsque ladite somme des débits courants réservés et de la différence des nouveaux débit à réserver et débit courant réservé est inférieure à la somme des débits de connexion (étape E6a), indépendamment du caractère prioritaire ou non de la demande d'augmentation de débit, alors le nouveau débit à réserver $D_{dem}^p$ est réservé et constitue un nouveau débit courant réservé $D_{res}^p$ par le terminal $1_p$. Dans le cas contraire, lorsque ladite somme des débits courants réservés et de la différence des nouveaux débit à réserver et débit courant réservé est supérieure à la somme des débits de connexion réservés (étape E6b), le bit de Priorité d'Augmentation de Débit PAD dans la cellule de demande est comparé à l'état "1", afin de déterminer si le nouveau débit à réserver $D_{dem}^p$ est inférieur au débit de connexion $D_{con}^p$, c'est-à-dire si la demande est prioritaire. Si tel n'est pas le cas, la demande de réservation de débit est définitivement rejetée (étape E6c). Lorsque le bit PAD est à "1", alors la cellule de demande de réservation du débit $D_{dem}^p$, qui a été transmise préalablement dans tous les noeuds du chemin de connexion afin de réduire le délai de réservation dans la totalité des noeuds dudit chemin, est écrite dans la file d'attente FIFO jusqu'à ce que des ressources soient libérées dans la voie multiplex de sortie afin d'allouer au terminal $1_p$, en supplément du débit courant précédemment réservé $D_{res}^p$, la différence de débit $(D_{dem}^p - D_{res}^p)$, et ainsi un nouveau débit réservé (étapes E5a, E6, E6a). Il faut noter que lors d'une demande d'augmentation de débit par le terminal $1_p$, la somme des débits courants réservés pour la voie multiplex de noeud du chemin de connexion et de la différence des nouveau débit à réserver et débit courant réservé par le terminal $1_p$ n'est pas comparée au débit utile disponible dans ladite voie multiplex de sortie, mais à la somme des débits de connexion réservés. La bande totale disponible allouée à une pluralité de terminaux connectés ne correspond pas à la capacité totale disponible dans chaque voie multiplex du chemin de connexion, mais à la somme des débits de connexion réservés par ces terminaux. Cela garantit en pratique une qualité de service optimale aux usagers en maintenant libre une partie du débit utile disponible dans chaque voie multiplex du chemin de connexion si le nombre de terminaux connectés est faible. Ainsi une partie du débit utile disponible dans chaque voie multiplex est laissée libre pour des terminaux se connectant ultérieurement.

Sachant que dans le cas d'une demande d'augmentation de débit prioritaire, la cellule de demande de réservation de débit est transmise dans chaque noeud du chemin de connexion sans qu'une réservation effective soit effectuée dans les noeuds en aval à des fins d'optimatisation du délai de réservation, il est prévu selon l'invention qu'une cellule de validation de réservation soit transmise de noeud en noeud, du premier noeud pour lequel la réservation n'a pas été possible au dernier noeud du chemin de connexion, dès lors que chaque réservation respective est effective dans chacun de ces noeuds (étape E8). Cette cellule de validation de réservation est reçue, après réservation dans le dernier noeud, par l'unité de gestion de protocole 4 qui en réponse transmet une cellule d'acquittement de réservation vers le terminal émetteur $1_p$ afin de confirmer la réservation.

Selon la seconde alternative de l'étape E4, la file d'attente FIFO n'est pas vide. A l'étape E5, comme à l'étape E6b, le noeud teste si la demande de réservation de débit est prioritaire en comparant le bit PAD à l'état "1". Lorsque la demande de réservation de débit n'est pas prioritaire, celle-ci est définitivement rejetée (étape E5b). Dans le cas où le bit PAD est égal à "1", alors la cellule de demande de réservation de débit est écrite dans la file d'attente FIFO (étape E5a). La demande ne sera lue dans la file FIFO et recevra satisfaction que dès lors que toutes les demandes précédentes mémorisées également dans la file d'attente FIFO ont abouti à une allocation de ressources aux terminaux concernés, et que la demande elle-même peut être satisfaite par libération de ressources d'autres terminaux. Après réservation du débit $D_{dem}^p$ dans le noeud, une cellule de validation de réservation est ensuite transmise au noeud suivant du chemin de connexion (étapes E7 et E8).

Comme montré par la boucle composée par les étapes E7, E8 et E4, dans la figure 5, la procédure de réservation décrite ci-dessus est mise en oeuvre dans tous les noeuds formant le chemin de connexion entre les deux terminaux $1_p$ et $2_q$. Finalement, lorsque dans tous les noeuds est réservé le nouveau débit à réserver $D^p_{dem}$, l'unité de gestion de protocole 4 associée au terminal récepteur $2_q$ ayant reçue une cellule de validation de réservation transmet un acquittement de réservation au terminal émetteur $1_p$ (étapes E7 et E9).

Il est à noter qu'une demande de réservation prioritaire, c'est-à-dire une demande pour laquelle le nouveau débit à réserver $D^p_{dem}$ est inférieur au débit de connexion $D^p_{con}$, est toujours satisfaite et n'est jamais rejetée. Afin de garantir une qualité de service optimale à l'usager, il est nécessaire que cette demande de réservation prioritaire soit acceptée rapidement. A cette fin, selon l'invention, les demandes de réservation non prioritaire ayant été acceptées peuvent être ultérieurement rejetées afin de libérer une partie de la bande qui leur est allouée pour accepter une demande de réservation prioritaire. Pour cela, l'unité de gestion de protocole 3 produit périodiquement, pour chacune des demandes de réservation non prioritaires qu'elle a reçues des terminaux $1_1$ à $1_p$ et qui ont été acceptées, des cellules de demande de prolongation de réservation non prioritaire respectives qui sont transmises à travers le chemin de connexion. Dans le premier noeud du chemin de connexion, en réponse à une cellule de demande de prolongation, est examiné le remplissage de la mémoire organisée en file d'attente, relative à la voie multiplex de sortie supportant la communication à réservation non prioritaire correspondante, qui mémorise les cellules de demande de réservation prioritaire. Si la mémoire est vide, la cellule de demande de prolongation est transmise au noeud suivant du chemin de connexion.

Dès lors que dans un noeud du chemin de connexion, la mémoire organisée en file d'attente contient au moins une cellule de demande d'augmentation de débit prioritaire, alors la demande de prolongation transmise dans la cellule de demande de prolongation est rejetée. Avantageusement, l'unité 3 inclut un temporisateur pour établir une durée estimée de traversée aller-retour de la cellule de demande de prolongation à travers les noeuds du réseau. Dans le cas où une cellule d'acceptation de prolongation transmise par l'unité 4 n'est pas reçue par l'unité 3 avant expiration de ladite durée estimée de traversée, la cellule de prolongation est rejetée. En réponse, l'unité 3 diminue le débit courant réservé non prioritaire dans chacun des noeuds du chemin de connexion qui est alloué au terminal, en le débit de connexion de ce terminal.

Typiquement, la fréquence de production des cellules de demande de prolongation par l'unité 3, après qu'une demande de réservation non prioritaire soit acceptée dans les noeuds du chemin de connexion, est égale à 200 ms.

Lorsqu'une demande de réservation non prioritaire est rejetée dans un noeud, il est nécessaire de libérer le débit correspondant réservé dans tous les noeuds en aval. Selon un processus de l'invention, un temporisateur est déclenché dans chaque noeud dès que le nouveau débit à réserver $D^p_{dem}$ non prioritaire est réservé.

Ce temporisateur établit une durée de temps prédéterminée qui est choisie égale au temps de traversée aller-retour d'une cellule à travers le réseau. Ce choix de la durée de temps prédéterminée résulte du fait qu'une cellule de demande de réservation de débit non prioritaire n'est jamais mémorisée dans une mémoire organisée en file d'attente d'un noeud, et la demande de réservation relative à cette cellule est soit refusée, soit acceptée instantanément. Ainsi, le premier noeud du chemin de connexion doit recevoir, si la demande de réservation est acceptée, une cellule d'acquittement de réservation, à l'expiration d'un délai maximal de traversée aller-retour d'une cellule dans le réseau. Si une cellule d'acquittement de réservation n'est pas reçue par chaque noeud préalablement à l'expiration de ladite durée de temps prédéterminée établit par le temporisateur, alors la réservation de débit effectuée dans ce noeud est annulée et le débit non prioritaire réservé est libéré.

## Revendications

1. Procédé de réservation de débit dans des noeuds d'un réseau de télécommunications à transfert temporel asynchrone, le long d'un chemin de connexion reliant un terminal émetteur ($1_p$) à un terminal récepteur ($2_q$), comprenant,

lors d'une phase initiale de demande d'établissement du chemin de connexion, l'émission par ledit terminal émetteur ($1_p$) d'une cellule de connexion incluant un identificateur dudit chemin de connexion (VPI, VCI) et un mot de réservation représentatif d'un débit de connexion à réserver ($D^p_{con}$), la connexion n'étant établie et ledit débit de connexion ($D^p_{con}$) n'étant réservé pour ledit terminal émetteur ($1_p$) dans les noeuds dudit chemin de connexion que si dans chacun des noeuds, une somme du total

$$\left( \sum_{p} D^p_{con} \right)$$

de débits de connexion réservés dans ledit chacun des noeuds et dudit débit de connexion ($D^p_{con}$) est inférieure à un débit utile disponible dans une voie multiplex sortant dudit chacun des noeuds et appartenant audit chemin de connexion, lesdits débits de connexion réservés étant réservés à d'autres terminaux et relatifs à ladite voie multiplex, et

lors d'une phase principale succédant à l'établissement du chemin de connexion et à la réservation dudit débit de connexion à réserver ($D^p_{con}$) en un débit de connexion réservé, l'émission à travers ledit chemin de connexion par ledit terminal émetteur ($1_p$) de cellules de

demande de réservation de débit incluant chacune un mot représentatif d'un nouveau débit à réserver $(D^p_{dem})$ pour modifier un débit courant réservé $(D^p_{res})$ en un nouveau débit réservé,

l'une desdites cellules de demande de réservation relative à une diminution de débit provoquant, dans ledit chacun des noeuds, une décrémentation dudit total de débits courants réservés de la différence desdits débit courant réservé $(D^p_{res})$ et nouveau débit à réserver $(D^p_{dem})$, caractérisé en ce que

l'une desdites cellules de demande de réservation relative à une augmentation de débit provoque, dans ledit chacun des noeuds,

d'une part, lorsqu'une somme du total de débits courants réservés mémorisés

$$\left( \sum_p D^p_{res} \right)$$

et de la différence $(D^p_{dem} - D^p_{res})$ desdits nouveau débit à réserver et débit courant réservé est supérieure à ladite somme

$$\left( \sum_p D^p_{con} \right)$$

du total de débits de connexion réservés, une mémorisation de ladite cellule de réservation en file d'attente si ledit nouveau débit à réserver $(D^p_{dem})$ est inférieur audit débit de connexion $(D^p_{con})$ ou un rejet de ladite cellule de réservation si ledit nouveau débit à réserver $(D^p_{dem})$ est supérieur audit débit de connexion $(D^p_{con})$, et,

d'autre part, lorsque ladite somme du total des débits courants réservés mémorisés

$$\left( \sum_p D^p_{res} \right)$$

et de la différence $(D^p_{dem} - D^p_{res})$ desdits nouveau débit à réserver et débit courant réservé est inférieure à ladite somme du total de débits de connexion réservés, une augmentation effective dudit débit courant réservé en ledit nouveau débit réservé, le cas échéant après ladite mémorisation en file d'attente et après augmentations effectives de débits courants réservés en de nouveaux débits réservés provoquées par des cellules de demande de réservation relatives à des augmentations de débit et mémorisées en file d'attente précédemment à ladite une desdites cellules de demande de réservation.

**2.** Procédé de réservation de débit conforme à la revendication 1, caractérisé par, lorsque ledit nouveau débit à réserver $(D^p_{dem})$ est supérieure audit débit de connexion $(D^p_{con})$, une transmission périodique par ledit terminal émetteur d'une cellule de demande de prolongation relative à une demande de prolongation de réservation de débit dans chacun des noeuds du chemin de connexion suite à ladite augmentation effective dudit débit courant réservé en ledit nouveau débit réservé, et

dans ledit chacun des noeuds du chemin de connexion, un rejet et une acceptation de ladite demande de prolongation de réservation respectivement si ladite file d'attente contient et ne contient pas au moins une cellule de demande de réservation, ledit rejet de la demande de prolongation provoquant une diminution dudit nouveau débit à réserver $(D^p_{dem})$ en ledit débit de connexion $(D^p_{con})$.

**3.** Procédé conforme à la revendication 1 ou 2, caractérisé en ce que ladite cellule de connexion comprend, en outre, un mot de débit permanent $(D^p_{per})$ représentatif d'un débit permanent minimum qui est alloué dans chacun desdits noeuds dudit chemin de connexion audit terminal émetteur $(1_p)$.

**4.** Procédé conforme à l'une quelconque des revendications 1 à 3, caractérisé en ce que lesdites cellules de demande de réservation relative à une augmentation de débit sont marquées par des informations de priorité (PAD = "0", "1") exploitées directement par ledit chacun des noeuds, respectivement différentes selon que ledit nouveau débit à réserver $(D^p_{dem})$ est supérieur ou inférieur audit débit de connexion $(D^p_{con})$.

**5.** Procédé conforme à l'une quelconque des revendications 1 à 4, caractérisé par, dans ledit chacun des noeuds, simultanément à l'augmentation d'un débit courant réservé en un nouveau débit réservé qui est $(D^p_{dem})$ supérieur audit débit de connexion $(D^p_{con})$, un déclenchement d'un temporisateur établissant une durée de temps prédéterminée égale à une durée maximale de traversée aller-retour d'une cellule à travers lesdits noeuds du chemin de connexion, et une diminution dudit nouveau débit réservé $(D^p_{res})$ en ledit débit de connexion $(D^p_{con})$ à l'expiration de ladite durée prédéterminée, si une cellule d'acquittement de réservation n'est pas reçue par ledit chacun des noeuds.

**6.** Procédé de réservation de débit conforme à l'une quelconque des revendications 1 à 5, caractérisé en ce que, lorsque ledit nouveau débit à réserver $(D^p_{dem})$ est supérieur audit débit de connexion $(D^p_{con})$, ladite cellule de demande de réservation relative à l'augmentation de débit est transmise dans tous les noeuds du chemin de connexion indépendamment d'une augmentation effective dudit débit courant réservé en le nouveau débit à réserver ($D^p_{dem}$) dans l'un quelconque desdits noeuds, une cellule de validation de réservation étant transmise de noeud en noeud d'un premier noeud pour lequel une augmentation effective dudit débit courant réservé en ledit nouveau débit n'est pas immédiatement possible à un dernier noeud dans le chemin de connexion en réponse à des augmentations de débit effectives respectives dans ces noeuds.

**Patentansprüche**

1. Verfahren zur Reservierung von Datenübertragungsraten in Knoten eines Telekommunikationsnetzes mit temporärer asynchroner Übertragung entlang eines Verbindungsweges, der ein Datensendegerät ($1_p$) mit einem Datenempfangsgerät ($2_q$) verbindet, umfassend

daß während einer Anfangsphase einer Anforderung der Herstellung des Verbindungsweges die Sendung durch das Datensendegerät ($1_p$) einer Verbindungszelle ein Kennzeichen des Verbindungsweges (VPI, VCI) und ein Reservierungswort enthält, das für eine zu reservierende Verbindungsdatenübertragungsrate ($DP_{con}$) repräsentativ ist, wobei die Verbindung nur hergestellt und die Verbindungsdatenübertragungsrate ($DP_{con}$) nur für das Datensendegerät ($1_p$) in den Knoten des Verbindungsweges reserviert wird, wenn in jedem der Knoten eine Summe des Gesamtbetrages

$$\left( \sum_{p} D^p_{con} \right)$$

der Verbindungsdatenübertragungsraten, die in besagtem jedem der Knoten reserviert sind, und der Verbindungsdatenübertragungsrate ($DP_{con}$) kleiner als eine verfügbare Nutzdatenübertragungsrate in einem Multiplexkanal ist, der von besagtem jedem der Knoten ausgeht und zu dem Verbindungsweg gehört, wobei die reservierten Verbindungsdatenübertragungsraten für andere Datenendgeräte und bezüglich des Multiplexkanals reserviert sind, und daß während einer Hauptphase, die auf die Herstellung des Verbindungsweges und auf die Reservierung der zu reservierenden Verbindungsdatenübertragungsrate ($DP_{con}$) folgt, mit einer reservierten Verbindungsdatenübertragungsrate, die Sendung durch den Verbindungsweg durch das Datensendegerät ($1_p$) von Zellen für die Datenübertragungsratenreservierungsanforderung jeweils ein Wort enthält, das für eine zu reservierende neue Datenübertragungsrate ($DP_{dem}$) repräsentativ ist, um eine aktuelle reservierte Datenübertragungsrate ($DP_{res}$) zu einer neuen reservierten Datenübertragungsrate abzuwandeln,

wobei eine der Zellen zur Reservierungsanforderung bezüglich einer Datenübertragungsverringerung in besagtem jedem der Knoten eine Dekrementierung des Gesamtwerts der aktuellen reservierten Datenübertragungsraten der Differenz der aktuellen reservierten Datenübertragungsrate ($DP_{res}$) und der zu reservierenden neuen Datenübertragungsrate ($DP_{dem}$) herbeiführt, dadurch **gekennzeichnet,** daß

eine der Reservierungsanforderungszellen bezüglich einer Datenübertragungsratenerhöhung in besagtem jedem der Knoten herbeiführt
einerseits, wenn eine Summe des Gesamtwerts der aktuellen gespeicherten reservierten Datenübertragungsraten

$$\left( \sum_{p} D^p_{res} \right)$$

und der Differenz ($DP_{dem}$ - $DP_{res}$) der zu reservierenden neuen Datenübertragungsrate und der aktuellen reservierten Datenübertragungsrate größer als die Summe

$$\left( \sum_{p} D^p_{con} \right)$$

des Gesamtwerts der reservierten Verbindungsdatenübertragungsraten ist, eine Speicherung der Reservierungszelle in der Warteschlange, wenn die zu reservierende neue Datenübertragungsrate ($DP_{dem}$) kleiner als die Verbindungsdatenübertragungsrate ($DP_{con}$) ist, oder eine Zurückweisung der Reservierungszelle, wenn die zu reservierende Datenübertragungsrate ($DP_{dem}$) größer als die Verbindungsdatenübertragungsrate ($DP_{con}$) ist, und andererseits, wenn die Summe des Gesamtwertes der aktuellen reservierten gespeicherten Datenübertragungsraten

$$\left( \sum_{p} D^p_{res} \right)$$

und der Differenz ($DP_{dem}$ - $DP_{res}$) der zu reservierenden neuen Datenübertragungsrate und der aktuellen reservierten Datenübertragungsrate kleiner als die Summe des Gesamtwerts der reservierten Verbindungsdatenübertragungsraten ist, eine effektive Erhöhung der aktuellen reservierten Datenübertragungsrate zu der neuen reservierten Datenübertragungsrate, gegebenenfalls nach der Speicherung in der Warteschlange und nach effektiven Erhöhungen von reservierten aktuellen Datenübertragungsraten zu reservierten neuen Datenübertragungsraten, die durch Reservierungsanforderungszellen bezüglich Datenübertragungsratenerhöhungen herbeigeführt worden sind und in der Warteschlange vorhergehend der besagten einen der Reservierungsanforderungszellen gespeichert sind.

2. Verfahren zur Reservierung von Datenübertragungsraten nach Anspruch 1, gekennzeichnet durch, während die zu reservierende neue Datenübertragungsrate ($DP_{dem}$) höher als die Verbindungsdatenübertragungsrate ($DP_{con}$) ist, eine periodische Übermittlung durch das Datensendegerät einer Verlängerungsanforderungszelle bezüglich einer Reservierungsverlängerungsanforderung für die Datenübertragungsrate in jedem der Knoten des Verbindungsweges im Anschluß an die effektive Erhöhung der reservierten aktuellen Datenübertragungsrate zur neuen reservierten Datenübertragungsrate und

in besagtem jedem der Knoten des Verbindungsweges eine Zurückweisung und eine Annahme der entsprechenden Reservierungsverlängerungsanforderung, wenn die Warteschlange Inhalt hat und nicht wenigstens eine Reservierungsanforderungszelle enthält, wobei die Zurückweisung der Verlängerungsanforderung eine Verringerung der zu reservierenden neuen Datenübertragungsrate ($DP_{dem}$) zu der neuen Verbindungsdatenübertragungsrate ($DP_{con}$) herbeiführt.

3. Verfahren nach Anspruch 1 oder 2, dadurch **gekennzeichnet,** daß die Verbindungszelle außerdem ein Dauerübertragungsratenwort ($DP_{per}$) umfaßt, das für eine minimale Dauerdatenübertragungsrate repräsentativ ist, die in jedem der Knoten des Verbindungsweges dem Datensendegerät ($1_p$) zugeordnet ist.

4. Verfahren nach einem beliebigen der Ansprüche 1 bis 3, dadurch **gekennzeichnet**, daß die Reservierungsanforderungszellen bezüglich einer Datenübertragungsratenerhöhung durch Prioritätsinformationen (PAD = "O", "1") markiert sind, die direkt durch besagten jeden der Knoten verarbeitet werden, jeweils unterschiedlich, je nachdem, ob die zu reservierende neue Datenübertragungsrate ($DP_{dem}$) größer oder kleiner als die Verbindungsdatenübertragungsrate ($DP_{con}$) ist.

5. Verfahren nach einem beliebigen der Ansprüche 1 bis 4, gekennzeichnet durch, in besagtem jedem der Knoten, gleichzeitig mit der Erhöhung einer reservierten aktuellen Datenübertragungsrate zu einer reservierten neuen Datenübertragungsrate, die ($DP_{dem}$) höher als die Verbindungsdatenübertragungsrate ($DP_{con}$) ist, eine Auslösung eines Verzögerungsgliedes, das eine vorbestimmte Zeitdauer gleich einer maximalen Dauer für den Vorwärts-Rückwärts-Durchlauf einer Zelle durch die Knoten des Verbindungsweges einrichtet, und eine Verringerung der neuen reservierten Datenübertragungsrate ($DP_{res}$) zu der Verbindungsdatenübertragungsrate ($DP_{con}$) bei Ablauf der vorbestimmten Dauer, wenn eine Reservierungsbestätigungszelle nicht durch besagten jeden der Knoten empfangen wird.

6. Verfahren zur Reservierung von Datenübertragungsraten nach einem beliebigen der Ansprüche 1 bis 5, dadurch **gekennzeichnet**, daß während die zu reservierende neue Datenübertragungsrate ($DP_{dem}$) größer als die Verbindungsdatenübertragungsrate ($DP_{con}$) ist, die Reservierungsanforderungszelle bezüglich der Datenübertragungsratenerhöhung in sämtlichen Knoten des Verbindungsweges unabhängig von einer effektiven Erhöhung der reservierten aktuellen Datenübertragungsrate zu der zu reservierenden neuen Datenübertragungsrate ($DP_{dem}$) in einem beliebigen der Knoten übermittelt wird, wobei eine Reservierungsvalidationszelle von Knoten zu Knoten von einem ersten Knoten aus, für den eine effektive Erhöhung der reservierten aktuellen Datenübertragungsrate zur neuen Datenübertragungsrate nicht sofort möglich ist, zu einem letzten Knoten im Verbindungsweg in Reaktion auf effektive entsprechende Datenübertragungsratenerhöhungen in diesen Knoten übermittelt wird.

## Claims

1. Process for reserving bitrate in the nodes of an asynchronous transfer mode telecommunications network, along a connection pathway connecting an emitter terminal ($1_p$) to a receiver terminal ($2_q$), comprising,

during an initial phase of requesting the establishment of the connection pathway, the emission by said emitter terminal ($1_p$) of a connection cell including an identifier of said connection pathway (VPI, VCI) and a reservation word representing a connection bitrate to be reserved ($DP_{con}$), said connection not being established and said connection bitrate ($DP_{con}$) not being reserved for said emitter terminal ($1_p$) in the nodes of said connection pathway unless, in each of the nodes, a sum of the total ($\Sigma DP_{con}$) of connection bitrates reserved in each node and of said connection bitrate ($DP_{con}$) is

less than a useful bitrate available in a multiplex channel leaving each of said nodes and belonging to said connection pathway, the connection bitrates reserved being reserved for other terminals and relating to said multiplex channel, and

during a main phase following the establishment of the connection pathway and the reserving of said connection pathway to be reserved ($D^p_{con}$) in a reserved connection bitrate, the emission, through said connection pathway, by said emitter terminal ($1_p$), of bitrate reservation request cells, each including a word representing a new bitrate to be reserved ($D^p_{dem}$) in order to modify a current reserved bitrate ($D^p_{res}$) into a new reserved bitrate,

one of said reservation request cells relating to a reduction in bitrate causing, in each said node, a decrease in the total of current bitrates reserved amounting to the difference between said current reserved bitrate ($D^p_{con}$) and said new bitrate to be reserved ($D^p_{dem}$), characterised in that

one of said reservation request cells relating to an increase in bitrate causes, in each of said nodes,

on the one hand, when a sum of the total of current reserved bitrates stored ($\Sigma\, D^p_{res}$) and of the difference ($D^p_{dem} - D^p_{res}$) between said new bitrate to be reserved and said current reserved bitrate is greater than the said sum ($\Sigma\, D^p_{con}$) of the total of reserved connection bitrates, said reservation cell to be stored in the waiting file if said new bitrate to be reserved ($D^p_{dem}$) is less than said connection bitrate ($D^p_{con}$) or said reservation cell to be rejected if said new bitrate to be reserved ($D^p_{dem}$) is greater than said connection bitrate ($D^p_{con}$), and,

on the other hand, when said sum of the total of the current reserved bitrates stored ($\Sigma\, D^p_{res}$) and of the difference ($D^p_{dem} - D^p_{res}$) between said new bitrate to be reserved and said current reserved bitrate is less than the said sum of the total of connection bitrates reserved, an actual increase in said current reserved bitrate to said new reserved bitrate, if appropriate after storage in the waiting file and after actual increases of current reserved bitrates into new reserved bitrates caused by the reservation request cells relating to increases in bitrate and stored in the waiting file preceding said one of the reservation request cells.

2. Process for reserving bitrate according to claim 1, characterised in that, when said new bitrate to be reserved ($D^p_{dem}$) is greater than said connection bitrate ($D^p_{con}$), there is periodic transmission by said emitter terminal of a cell for requesting an extension relative to a request for extending the reservation of bitrate in each of the nodes of the connection pathway following said actual increase in said current reserved bitrate into said new reserved bitrate, and

in each of said nodes of the connection pathway, there is rejection or acceptance, respectively, of said request for an extension of the reservation depending on whether said waiting file contains or does not contain at least one reservation request cell, said rejection of the request for extension leading to a decrease in said new bitrate to be reserved ($D^p_{dem}$) to said connection bitrate ($D^p_{con}$).

3. Process according to claim 1 or 2, characterised in that said connection cell further comprises a permanent bitrate word ($D^p_{per}$) representing a minimum permanent bitrate which is allocated in each of said nodes of said connection pathway to said emitter terminal ($1_p$).

4. Process according to any one of claims 1 to 3, characterised in that said cells for requesting an extension relative to an increase in bitrate are labelled with priority data (PAD = "0", "1") used directly by each of said nodes and differing respectively according to whether said new bitrate to be reserved ($D^p_{dem}$) is greater or less than said connection bitrate ($D^p_{con}$).

5. Process according to any one of claims 1 to 4, characterised in that, in each of said nodes, simultaneously with the increase in a current reserved bitrate to a new reserved bitrate ($D^p_{dem}$) which is greater than said connection bitrate ($D^p_{con}$), a timer is actuated which establishes a predetermined length of time equal to a maximum return journey of a cell through said nodes of the connection pathway, and there is a reduction in said new reserved bitrate ($D^p_{dem}$) to said connection bitrate ($D^p_{con}$) at the end of said predetermined period, if a cell for acquittal of the reservation is not received by each of said nodes.

6. Process for reserving bitrate according to any one of claims 1 to 5, characterised in that, when each new bitrate to be reserved ($D^p_{dem}$) is greater than said connection bitrate ($D^p_{con}$), said cell for requesting a reservation relative to the increase in bitrate is transmitted to all the nodes of the connection pathway irrespective of an actual increase in said current reserved bitrate to the new bitrate to be reserved ($D^p_{dem}$) in any one of said nodes, a cell for validating the reservation being transmitted from node to node of a first node for which an actual increase in said current reserved bitrate into said new bitrate is not immediately possible at a last node in the connection pathway in response to respective actual increases in bitrate in these nodes.

## FIG.1

## FIG.2

## *FIG.3*

TERMINAL $1_1$

Réseau ATM

$2_1$ TERMINAL

Etablissement de connexion $(D^p_{per}, D^p_{con})$
et demande de réservation $(D^p_{dem})$

Réservations
dans les noeuds

TERMINAL
EMETTEUR

UNITE
FRP

UNITE
FRP

TERMINAL

$1_p$

3

Acquittement des
réservations ou rejet

4

$2'_q$

Acquittement ou rejet

TERMINAL $1_P$

$2_Q$ TERMINAL

## *FIG.4*

Débit (D)

$D^p_{int}$

$D^p_{res}$

$D^p_{con}$

$D^p_{con}$

$D^p_{per}$

0

A   B   C   D   E   temps

# FIG.5

```
                    DEBUT
                      │
      ┌───────────────▼───────────────┐
  E1 ─┤   ETABLISSEMENT DE CONNEXION   │
      │      (D_per^p) et (D_con^p)     │
      └───────────────┬───────────────┘
                      ≈      CONNEXION ETABLIE
                      ◄─ NECESSITE D'AUGMENTATION DE DEBIT
      ┌───────────────▼───────────────┐
  E2 ─┤      ENVOI CELLULE DE DEMANDE   │
      │   DE RESERVATION DE DEBIT (D_dem^p) │
      └───────────────┬───────────────┘
```

TERMINAL EMETTEUR

UNITE 3 FRP (MARQUAGE)

NOEUDS

$E3$: $D_{dem}^p \leqslant D_{con}^p$ — non → $E3b$: non prioritaire PAD="0"

oui

$E3a$: Prioritaire PAD="1"

$E4$: FIFO vide — non → $E5$: PAD="1" — non → $E5b$: Rejet réservation

oui (E4) / oui (E5) → $E5a$: Mémorisation cellule $(D_{dem}^p)$ dans FIFO

$E6$: $\frac{P}{\Sigma_p} D_{res}^p - (D_{dem}^p - D_{res}^p) \leqslant \Sigma_p D_{con}^p$

non → $E6b$: PAD="1" — oui → (boucle) / non → $E6c$: Rejet réservation → FIN

oui → $E6a$: Réservation $D_{res}^p \equiv D_{dem}^p$

$E7$: Dernier noeud — non → $E8$: Transmettre cellule de demande de réservation (PAD="0") ou cellule de validation (PAD="1") au noeud suivant

oui → $E9$: Transmission/acquittement au terminal émetteur par unité 4 → FIN

FIN